# EUROPÄISCHE PATENTSCHRIFT

(11) **EP 0 541 759 B1**
(45) Veröffentlichungstag und Bekanntmachung des Hinweises auf die Patenterteilung: **26.10.1994**
(21) Anmeldenummer: 92911260.5
(22) Anmeldetag: 04.06.1992
(51) Int. Cl.: B01J 2/16, B01J 8/38, B01J 8/18

(54) **FLIESSBETTAPPARATUR ZUM BEHANDELN PARTIKELFÖRMIGEN GUTES**
FLUIDIZED BED FOR PROCESSING PARTICULATE MATERIAL
DISPOSITIF A LIT FLUIDISE POUR LE TRAITEMENT DE MATIERE PARTICULAIRE

(30) Priorität: 05.06.1991 DE 4118433
(43) Veröffentlichungstag der Anmeldung: 19.05.1993
(73) Patentinhaber: Hüttlin Coating-Technik GmbH, D-79585 Steinen (DE)
(72) Erfinder: Hüttlin, Herbert, D-79585 Steinen (DE)
(74) Vertreter: Weller, Wolfgang, Dr.rer.nat.
(86) Internationale Anmeldenummer: EP9201246
(87) Internationale Veröffentlichungsnummer: WO9221439

(56) Entgegenhaltungen:
- DE-B- 1 071 056
- FR-A- 2 016 048

## Beschreibung

Die Erfindung betrifft eine Fließbettapparatur zum Behandeln partikelförmigen Gutes mit
- einem Behälter, der einen Eintrittsraum sowie einen darüber angeordneten Fließbettraum enthält,
- einem Kranz Leitplatten mit Zwischenräumen, in denen ein vom Eintrittsraum in den Fließbettraum aufsteigender Gasstrom eine vorgegebene Richtung, insbes. einen Drall, erhält, und
- Düsen zum Einsprühen fließfähiger Substanzen in den Gasstrom, die in einzelnen Zwischenräumen zwischen je zwei Leitplatten angeordnet sind.

Verschiedene Ausführungsformen einer solchen Apparatur sind aus der DE 38 39 723 C1 bekannt. Dabei wird dem Eintrittsraum ein Prozeßgas, beispielsweise trockene Luft, entweder zentral von unten oder durch ein Tauchrohr zugeführt, das sich von oben her durch den Fließbettraum in den Eintrittsraum erstreckt. Vom Eintrittsraum strömt das Prozeßgas durch sämtliche zwischen den Leitplatten gebildeten Zwischenräume hindurch in den Fließbettraum. Die Zwischenräume, in denen Düsen angeordnet sind, haben durch diese Düsen verengte Strömungsquerschnitte und werden deshalb von geringeren Mengen Prozeßgas je Zeiteinheit durchströmt als die von Düsen freien Zwischenräume. Infolgedessen können in einem Fließ- oder Wirbelbett, das sich im Fließbettraum ausbilden soll, Unregelmäßigkeiten entstehen, die nicht in jedem Fall wünschenswert sind. Ein vollständig gleichmäßiges Fließbett ist beispielsweise dann erwünscht, wenn Tabletten getrocknet werden sollen, die mit einer durch die Düsen eingesprühten Flüssigkeit lackiert worden sind.

Der Erfindung liegt deshalb die Aufgabe zugrunde, bei einer Fließbettapparatur zum Behandeln partikelförmigen Gutes eine zusätzliche Möglichkeit zur Beeinflussung und vor allem zur Vergleichmäßigung des Fließ- oder Wirbelbettes zu schaffen. Partikelförmiges Gut, das in einer solchen Apparatur behandelt werden soll, besteht beispielsweise aus runden oder länglichen Tabletten, Pellets od.dgl., also Partikeln, die als Schüttgut Zwischenräume freilassen. Die Behandlung besteht beispielsweise im Aufbringen einer magensaftresistenten Umhüllung aus einer wäßrigen oder organischen Lösung, Dispersion oder Suspension auf solche Partikel.

Die Aufgabe ist erfindungsgemäß ausgehend von einer Fließbettapparatur der eingangs beschriebenen Gattung dadurch gelöst, daß
- im Eintrittsraum eine erste Eintrittskammer angeordnet ist, an die nur von Düsen freie Zwischenräume zwischen Leitplatten angeschlossen sind,
- die Zwischenräume, in denen Düsen angeordnet sind, gegen die erste Eintrittskammer abgeschirmt und an eine zweite Eintrittskammer angeschlossen sind, und
- die Eintrittskammern getrennt voneinander mit Prozeßgas beschickbar sind.

Damit wird erreicht, daß die Strömungsverhältnisse in den mit Düsen versehenen Zwischenräumen zwischen den Leitplatten unabhängig von den Strömungsverhältnissen in Zwischenräumen, die von Düsen frei sind, gesteuert werden können. Dabei kann der Druck in der zweiten Eintrittskammer größer, gleichgroß oder kleiner sein als in der ersten Eintrittskammer.

Die zweite Eintrittskammer ist vorzugsweise eine mit dem Behälter konzentrische Ringkammer. Dabei ist es zweckmäßig, wenn sich Kanäle im wesentlichen radial von der zweiten Eintrittskammer zu den Zwischenräumen erstrecken, in denen Düsen angeordnet sind.

Vorzugsweise erstreckt sich die zweite Eintrittskammer rings um ein Zentralrohr zum Abführen von Prozeßgas, das in einem oberen Bereich des Fließbettraumes beginnt und sich nach unten aus dem Behälter herauserstreckt.

Bei einer besonders zweckmäßigen Ausführungsform der Erfindung ist den beiden Eintrittskammern je ein eigenes Gebläse vorgeschaltet.

Dabei ist es ferner zweckmäßig, wenn stromabwärts vom Fließbettraum ein Rückluftgebläse angeordnet ist, das im Fließbettraum oberhalb des fluidisierten Gutes einen Unterdruck gegenüber der Umgebung des Behälters aufrechterhält, während in den beiden Eintrittskammern ein Überdruck herrscht.

Die erfindungsgemäße Fließbettapparatur kann in bestimmten Fällen auch vom Rückluftgebläse allein in Betrieb gehalten werden. Auch in diesem Fall lassen sich die Gasströme, die von den Eintrittskammern in die Fließbettkammer gelangen, unabhängig voneinander regeln, wenn den Eintrittskammern Drosselvorrichtungen beliebiger bekannter Art vorgeschaltet sind. Die beschriebene Betriebsweise mit zwei vor den Eintrittskammern angeordneten, getrennt regelbaren Gebläsen, ist jedoch im allgemeinen vorzuziehen.

Ein Ausführungsbeispiel der Erfindung wird im folgenden anhand schematischer Zeichnungen mit weiteren Einzelheiten erläutert. Es zeigen:
- Fig. 1: einen senkrechten Axialschnitt eines Behälters der erfindungsgemäßen Apparatur;

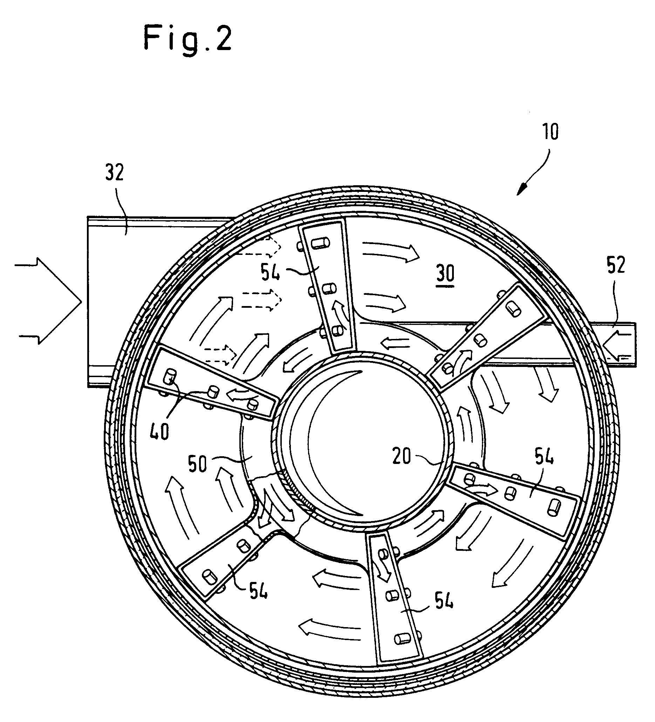

- Fig. 2: den waagerechten Querschnitt II-II in Fig. 1;
- Fig. 3: den waagerechten Querschnitt III-III in Fig. 1;
- Fig. 4: einen stark vergrößerten Ausschnit aus Fig. 1 mit weiteren Einzelheiten und
- Fig. 5: ein Schaltbild der erfindungsgemäßen Fließbettapparatur.

Zu der dargestellten Fließbettapparatur gehört ein im wesentlichen zylindrischer Behälter 10 mit einem topfförmigen Unterteil 12 und einem ringförmigen Oberteil 14 sowie einem aufschwenkbaren Deckel 16. Das Unterteil 12 ist gegen das Oberteil 14, und dieses gegen den Deckel 16, durch aufblähbare Dichtungen 18 abgedichtet. Durch den Behälter 10 erstreckt sich, mit diesem gleichachsig, ein Zentralrohr 20, das innerhalb des Oberteils 14 einen trichterförmigen Einlaß 22 aufweist. Der Einlaß 22 beginnt in Höhe des oberen Randes des Oberteils 14 und hat eine von außen gesehen konkave Wölbung, die von einer nach innen gerichtete Wölbung 24 des Oberteils 14 derart umschlossen ist, daß zwischen dem oberen Rand des Einlasses 22 und dem oberen Rand des Oberteils 14 ein verengter Ringraum freibleibt. Auf dem Einlaß 22 ist ein Sieb 26 angeordnet, das engmaschig genug ist, um zu behandelnde Partikel im Behälter 10 zurückzuhalten. Das Zentralrohr 20 erstreckt sich durch den Boden 28 des Unterteils 12 nach außen.

Im Unterteil 12 des Behälters 10 ist eine erste Eintrittskammer 30 ausgebildet, die über einen ersten Einlaßstutzen 32 mit Prozeßgas, beispielsweise warmer trockener Luft, versorgt werden kann. Die erste Eintrittskammer 30 enthält eine Wendel 34, die sich rings um das Zentralrohr 20 nach oben erstreckt und dem eintretenden Prozeßgas einen Drall erteilt. Nach oben hin ist die erste Eintrittskammer 30 durch einen Kranz radialer Leitplatten 36 abgegrenzt, die im normalen Betrieb radiale Zwischenräume 38 zwischen sich freilassen. In einigen dieser Zwischenräume 38 sind je mehrere Düsen 40 radial gegeneinander versetzt angeordnet. Im dargestellten Beispiel enthalten sechs von insgesamt sechsunddreißig Zwischenräumen 38 je drei Düsen 40, die Mehrstoffdüsen sein können.

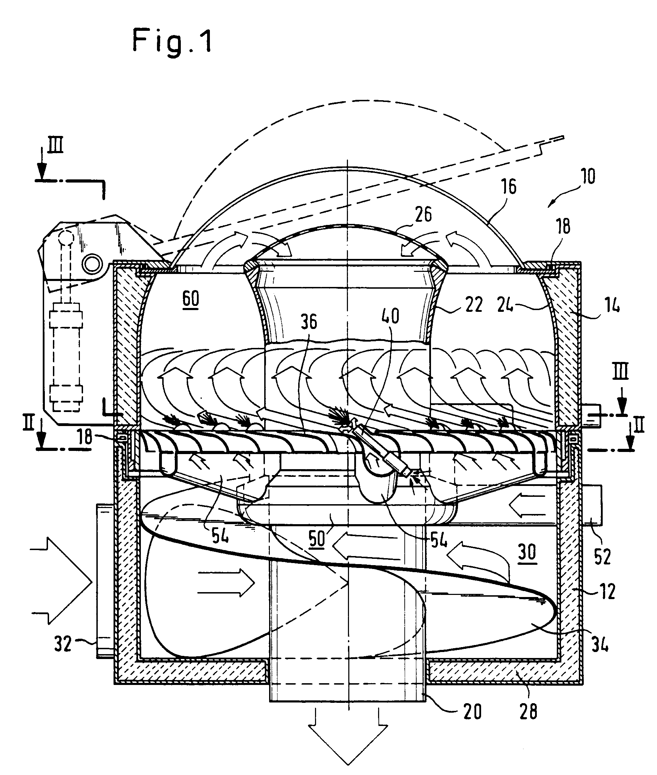

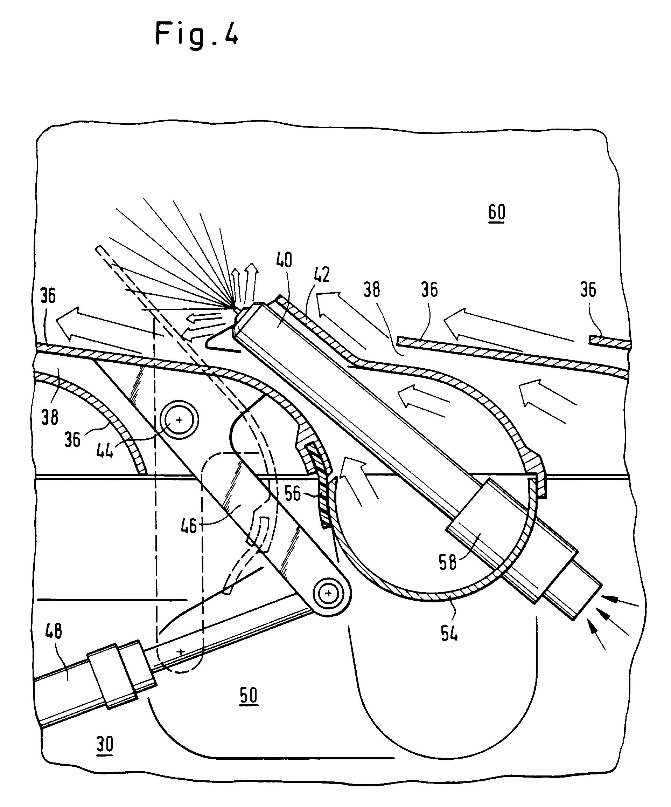

Jede der Düsen 40 ist durch einen Schirm 42 gegen unmittelbaren Aufprall von zu behandelnden Partikeln weitgehend geschützt. Sämtliche Leitplatten 36 sind um je einen radialen Lagerbolzen 44 schwenkbar zwischen einer Schließstellung, einer Vielzahl möglicher Betriebsstellungen, von denen eine in Fig. 1 und 4 mit vollen Linien abgebildet ist, und einer in Fig. 1 bei zwei Leitplatten 36 mit gestrichelten Linien angedeuteten Reinigungsstellung. In ihrer Schließstellung überlappen sich die Leitplatten 36 derart, daß sie einen dichten Zwischenboden bilden. In den verschiedenen Betriebsstellungen verstärken die Leitplatten 36 den Drall mehr oder weniger, den die Wendel 34 dem in die Eintrittskammer 30 eingeleiteten Prozeßgas schon erteilt hat. In der Reinigungsstellung sind die Leitplatten 36 steil nach oben gerichtet. Zum Schwenken weist jede der Leitplatten 36 einen Hebel 46 auf, der an eine stufenlos steuerbare oder sogar regelbare pneumatische oder hydraulische Kolbenzylindereinheit 48 angelenkt ist.

Rings um das Zentralrohr 20 ist im oberen Endbereich der Wendel 34 eine zweite Eintrittskammer 50 ausgebildet, die von der ersten Eintrittskammer 30 getrennt ist und unabhängig von dieser über einen zweiten Einlaßstutzen 52 mit Prozeßgas versorgt werden kann. Von der zweiten Eintrittskammer 50 erstrecken sich Kanäle 54 im wesentlichen radial nach außen. Die Anzahl der Kanäle 54 stimmt mit der Anzahl der Zwischenräume 38 überein, die mit Düsen 40 besetzt sind; im dargestellten Beispiel sind also sechs radiale Kanäle 54 vorgesehen. Jeder dieser Kanäle 54 schirmt einen der mit Düsen 40 versehenen Zwischenräume 38 gegen die erste Eintrittskammer 30 ab und versorgt den betreffenden Zwischenraum mit Prozeßluft aus der zweiten Eintrittskammer 50.

Die Kanäle 54 haben in ihrem an die zweite Eintrittskammer 50 angrenzenden Bereich einen U-förmigen Querschnitt, der sich mit zunehmendem radialen Abstand von der zweiten Eintrittskammer 50 zu einem ungefähr halbkreisförmigen Querschnitt verengt. Jeder der Kanäle 54 ist gegen eine benachbarte schwenkbare Leitplatte 36 durch eine an dieser befestigte Dichtleiste 56 abgedichtet. Die Düsen 40 sind in je einer Hülse 58, die im zugehörigen Kanal 54 befestigt ist, in ihrer Längsrichtung einstellbar befestigt.

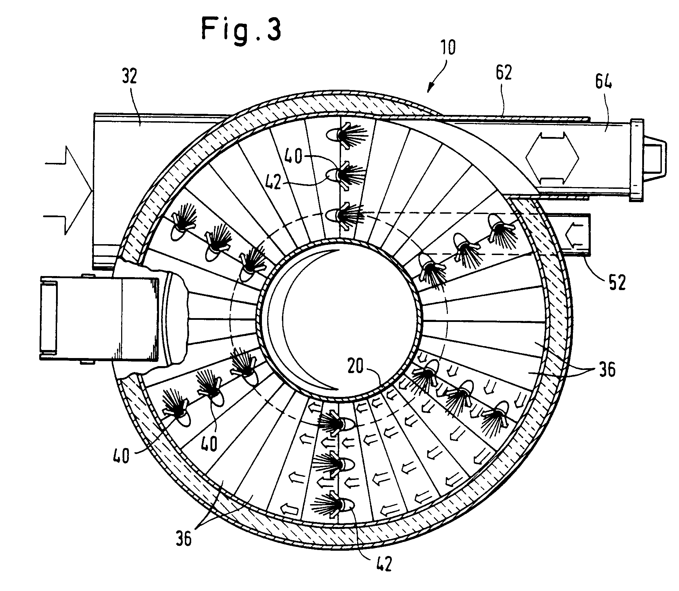

Im Oberteil 14 des Behälters 10 ist ein Fließbettraum 60 ausgebildet; von diesem erstreckt sich tangential ein Gutauslaß 62 nach außen, der mit einem Stopfen 64 verschließbar ist. Der Stopfen 64 ist in Fig. 3 in halbherausgezogener Stellung gezeichnet. In der Schließstellung der Leitplatten 36 läßt sich der Fließbettraum 60 bei geöffnetem Deckel 16 mit zu behandelnden Partikeln füllen, beispielsweise bis etwa zur Hälfte seiner Höhe.

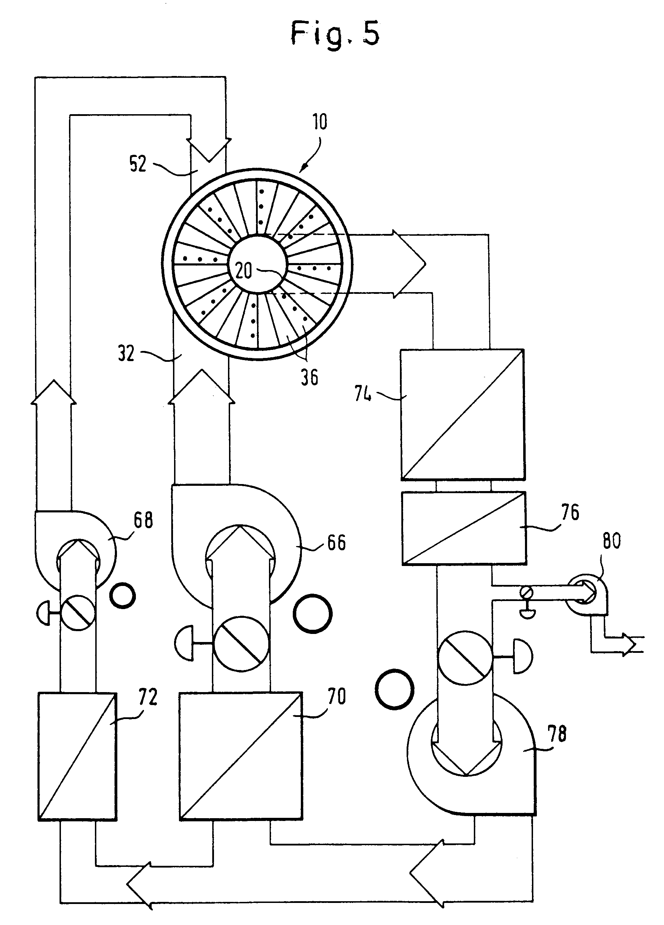

Gemäß Fig. 5 sind die beiden Einlaßstutzen 32 und 52 mit der Druckseite je eines Gebläses 66 bzw. 68 verbunden, dessen Saugseite an einen Aufbereitungsmonobloc 70 bis 72 angeschlossen ist. In jeden Aufbereitungsmonobloc 70 und 72 sind Filter, ein Kondensator für Lösungsmittel sowie ein Prozeßgaserhitzer integriert, wobei in bekannter Weise für Wärmerückgewinnung gesorgt sein kann. Das untere Ende des Zentralrohrs 20 ist über einen Staubabscheider 74 und einen Feinfilter 76 an die Saugseite eines Rückluftgebläses 78 angeschlossen, dessen Druckseite mit den beiden Aufbereitungsmonoblocs 70 und 72 verbunden ist. Zwischen Feinfilter 76 und Rückluftgebläse 78 zweigt eine Leitung nach außen ab, die ein Unterdruck-Sicherungsgebläse 80 enthält.

Die beschriebene Fließbettapparatur wird vorzugsweise derart betrieben, daß das Prozeßgas in jeder der beiden Eintrittskammern 30 und 50 einen Überdruck zwischen 250 und 1000 kp/m² hat, während in dem Bereich zwischen der Oberfläche des im Fließbettraum 60 fluidisierten zu behandelnden Gutes und dem Deckel 16 ein stabiler Unterdruck von 5 bis 10 kp/m² herrscht. Diese Gestaltung der Druckverhältnisse ermöglicht es, den Deckel 16 bei laufendem Prozeß zu öffnen, wenn beispielsweise Proben des behandelten Gutes entnommen werden sollen.

## Patentansprüche

1. Fließbettapparatur zum Behandeln partikelförmigen Gutes mit
- einem Behälter (10), der einen Eintrittsraum (30, 50) sowie einen darüber angeordneten Fließbettraum (60) enthält,
- einem Kranz Leitplatten (36) mit Zwischenräumen (38), in denen ein vom Eintrittsraum (30, 50) in den Fließbettraum (60) aufsteigender Gasstrom einen Drall erhält, und
- Düsen (40) zum Einsprühen fließfähiger Substanzen in den Gasstrom, die in einzelnen Zwischenräumen (38) zwischen je zwei Leitplatten (36) angeordnet sind,
dadurch **gekennzeichnet,** daß
- im Eintrittsraum (30, 50) eine erste Eintrittskammer (30) angeordnet ist, an die nur von Düsen (40) freie Zwischenräume (38) zwischen Leitplatten (36) angeschlossen sind,
- die Zwischenräume (38), in denen Düsen (40) angeordnet sind, durch je einen sie gegen die erste Eintrittskammer (30) abschirmenden, im wesentlichen radialen Kanal (54) an eine ringförmige zweite Eintrittskammer (50) angeschlossen sind, und
- die Eintrittskammern (30, 50) getrennt voneinander mit Prozeßgas beschickbar sind.

2. Fließbettapparatur nach Anspruch 1,
dadurch **gekennzeichnet,** daß die zweite Eintrittskammer (50) mit dem Behälter (10) konzentrisch ist.

3. Fließbettapparatur nach Anspruch 2,
dadurch **gekennzeichnet,** daß die zweite Eintrittskammer (50) sich rings um ein Zentralrohr (20) zum Abführen von Prozeßgas erstreckt, das in einem oberen Bereich des Fließbettraumes (60) beginnt und sich nach unten aus dem Behälter (10) herauserstreckt.

4. Fließbettapparatur nach einem der Ansprüche 1 bis 3,
dadurch **gekennzeichnet,** daß den beiden Eintrittskammern (30, 50) je ein eigenes Gebläse (66, 68) vorgeschaltet ist.

5. Fließbettapparatur nach Anspruch 4,
dadurch **gekennzeichnet,** daß stromabwärts vom Fließbettraum (60) ein Rückluftgebläse (78) angeordnet ist, das im Fließbettraum (60) einen Unterdruck gegenüber der Umgebung des Behälters (10) aufrechterhält, während in den beiden Eintrittskammern (30, 50) ein Überdruck herrscht.

## Claims

1. A fluidized bed apparatus for treating particulate materials, comprising
- a vessel (10) with an entrance space (30, 50) and a fluidized bed space (60) located above the same,
- a ring of baffle plates (36) with intermediate spaces (38) in which a gas stream rising from the entrance space (30, 50) to the fluidized bed space (60) is given a twist, and
- nozzles (40) disposed in individual intermediate spaces (38) between a pair of baffle plates (36) each, for spraying fluidizable substances into the gas stream,
**characterized** in that
- a first inlet chamber (30) is arranged in the entrance space (30, 50) and only intermediate spaces (38) without nozzles (40) between baffle plates (36) communicate with said inlet chamber,
- the intermediate spaces (38) in which nozzles (40) are disposed are connected to an annular second inlet chamber (50) through a substantially radial passage (54) each which shields them from the first inlet chamber (30), and
- the inlet chambers (30, 50) are adapted to be fed separately with process gas.

2. The fluidized bed apparatus as claimed in claim 1, characterized in that the second inlet chamber (50) is concentric with the vessel (10).

3. The fluidized bed apparatus as claimed in claim 2, characterized in that the second inlet chamber (50) extends all around a central pipe (20) for the discharge of process gas which pipe begins in an upper region of the fluidized bed space (60) and extends down and out of the vessel (10).

4. The fluidized bed apparatus as claimed in any one of claims 1 to 3, characterized in that separate fans (66, 68) are connected upstream of each of the two inlet chambers (30, 50).

5. The fluidized bed apparatus as claimed in claim 4, characterized in that a return air fan (78) is arranged down-stream of the fluidized bed space (60) to maintain negative pressure in the fluidized bed space (60) as compared to the surroundings of the vessel (10), while positive pressure prevails in the two inlet chambers (30, 50).

## Revendications

1. Appareil à lit fluidisé pour le traitement d'une matière en forme de particules comprenant :
- un récipient (10), qui contient un espace d'introduction (30, 50) ainsi qu'un espace de lit fluidisé (60) disposé sur celui-ci,
- une couronne de plaques directrices (36) possédant des espaces intermédiaires (38), dans lesquels un courant gazeux montant de l'espace d'introduction (30, 50) dans l'espace de lit fluidisé (60) acquiert une torsion, et
- des buses (40) pour pulvériser des substances fluides dans le courant gazeux, qui sont disposées dans des espaces intermédiaires (38) particuliers entre à chaque fois deux plaques directrices (36),
caractérisé en ce que
- dans l'espace d'introduction (30, 50) est disposée une première chambre d'introduction (30), à laquelle ne sont raccordés que les espaces intermédiaires (38) entre les plaques directrices (36) exempts de buses (40),
- les espaces intermédiaires (38), dans lesquels sont disposées les buses (40), sont raccordés à une deuxième chambre d'introduction (50) ayant la forme d'un anneau, chacun par l'intermédiaire d'un canal essentiellement radial (54) les protégeant de la première chambre d'introduction (30), et
- les chambres d'introduction (30, 50) peuvent être alimentées en gaz de procédé séparément l'une de l'autre.

2. Appareil à lit fluidisé selon la revendication 1, caractérisé en ce que la deuxième chambre d'introduction (50) est concentrique au récipient (10).

3. Appareil à lit fluidisé selon la revendication 2, caractérisé en ce que la deuxième chambre d'introduction (50) s'étend tout autour d'un tuyau central (20) pour l'évacuation du gaz de procédé, qui débute dans une région supérieure de l'espace de lit fluidisé (60) et s'étend vers le bas en sortant du récipient (10).

4. Appareil à lit fluidisé selon l'une quelconque des revendications 1 à 3, caractérisé en ce qu'une soufflante (66, 68) individuelle est montée en amont de chacune des deux chambres d'introduction (30, 50).

5. Appareil à lit fluidisé selon la revendication 4, caractérisé en ce que l'on a disposé en aval de l'espace de lit fluidisé (60) une soufflante à recyclage d'air (78) qui maintient dans l'espace de lit fluidisé (60) une dépression par rapport à l'environnement du récipient (10), alors que dans les deux chambres d'introduction (30, 50) règne une surpression.
